# EUROPEAN PATENT SPECIFICATION

(11) **EP 3 079 898 B1**
(45) Date of publication and mention of the grant of the patent: **15.04.2020**
(21) Application number: 14830555.0
(22) Date of filing: 10.12.2014
(51) Int. Cl.: B32B 7/00, B32B 7/02, B32B 7/04, B32B 7/10, B32B 7/12, B32B 15/00, B32B 15/08, B32B 15/082, B32B 15/085, B32B 15/20, B32B 27/00, B32B 27/08, B32B 27/30, B32B 27/32, B32B 27/36

(54) **A THERMOFORMABLE BLISTER MATERIAL WITH HUMIDITY, OXYGEN AND LIGHT BARRIER, FOR PACKAGING DIETARY AND COSMETIC PRODUCTS, MEDICAL DEVICES AND MEDICINAL PRODUCTS**
THERMOFORMBARES BLISTERPACKUNGSMATERIAL MIT FEUCHTIGKEITS-, SAUERSTOFF UND LICHTBARRIERE ZUR VERPACKUNG VON DIÄT- UND KOSMETIKPRODUKTEN, MEDIZINISCHEN VORRICHTUNGEN UND MEDIZINISCHEN PRODUKTEN
MATÉRIAU À CLOQUE THERMOFORMABLE À UNE BARRIÈRE CONTRE L'HUMIDITÉ, L'OXYGÈNE ET LA LUMIÈRE, POUR EMBALLER DES PRODUITS DIÉTÉTIQUES ET COSMÉTIQUES, DES DISPOSITIFS MÉDICAUX ET DES PRODUITS MÉDICINAUX

(30) Priority: 10.12.2013 IT MI20132053
(43) Date of publication of application: 19.10.2016
(73) Proprietor: Probiotical S.p.A., 28100 Novara (NO) (IT)
(72) Inventor: MOGNA, Giovanni, I-28100 Novara (IT)
(74) Representative: Hoffmann Eitle
(86) International application number: PCT/IB2014/002722
(87) International publication number: WO 2015/087144

(56) References cited:
- EP-A1- 0 002 692
- WO-A1-2009/138218
- IT-A1- MI20 111 718
- US-A1- 2011 049 003

## Description

The present invention relates to a multilayer blister material having excellent mechanical properties allowing said material to be thermoformable, highly workable and ductile. Moreover, said multilayer material combines the above excellent mechanical properties with a high moisture, oxygen and light barrier.

The multilayer material of the present invention can be advantageously used for packaging dietary and cosmetic products, medical devices and medicinal products.

Furthermore, the present invention relates to a primary packaging in blister form whose cavity getting in direct contact with the formulations of dietary and cosmetic products, medical devices and medicinal products such as e.g. tablets, pills, ovules, powders, granulates, suppositories, hard and soft capsules (also known as soft-gel capsules), is made of the multilayer material of the present invention.

It is known in the pharmaceutical and cosmetic industry and in the field of medical devices and dietary supplements how important the quality of a primary packaging is for ensuring a suitable shelf life, which is useful for marketing finished products in the form of tablets, pills, ovules, powders, granulates, suppositories, hard and soft capsules (also known as soft gel capsules).

Primary packaging means e.g. a blister, made up of a cavity and a cover forming a housing, made in a material getting in direct contact with finished products placed in said housing. Conversely, secondary packaging means the container (package of the end product as marketed), usually a box made of paper or paper lined with plastic materials, which contains inside e.g. one or more blisters.

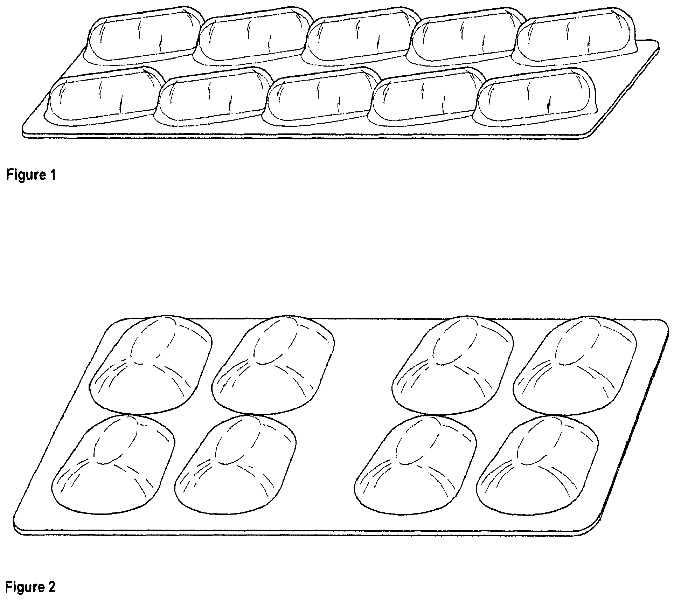

There are on the market some types of blisters ((a) type for shortness) (Figure 1) having a cover made e.g. using an aluminum sheet or layer and a cavity made e.g. using a thermoformable transparent material. IT MI20 111 718 A1 discloses a multilayer material for packaging a formulation containing probiotic microorganisms, with the structure:PVC/PP/EVOH/PP/PVC.

There are also other types of blisters ((b) type for shortness) having a cover made e.g. using an aluminum sheet or layer and a cavity made e.g. using an aluminum sheet or layer or as an alternative an aluminum sheet or layer lined with plastic material such as e.g. a multilayer material (polyethylene/aluminum/polyethylene terephthalate - PE/AL/PET).

In the case of formulations containing pharmacological active substances and/or instable and/or easily perishable components with biological activity, above all if they come in contact with the outer environment (humidity, water vapor, light and oxygen), (a) type blisters are not suitable for ensuring a sufficient stability with the resulting wasting of the active substance contained therein.

In practice, external agents such as humidity, water vapor, light and oxygen get through the thermoformable, transparent material used, e.g. for making the cavity of an (a) type blister, and change some chemical-physical parameters of a formulation comprising the active substances and the technological additives/adjuvants causing instability and loss of effectiveness of the active components contained therein,

Said agents have proved particularly decisive in accelerating reaction kinetics of oxidation hydrolysis, photochemistry and putrefaction. If the active substances consist of or comprise microorganisms, said outer agents (humidity, water vapor, light and oxygen) can severely affect microbial metabolism with subsequent formation of toxic catabolites leading to cell death.

In any field where living bacterial cultures, such as by way of non-limiting example, are used, in the field of probiotics or products comprising microorganisms which are able to give the consumer beneficial effects for his/her health if used in adequate amounts and for a suitable time, shelf-life effectiveness is endangered if microbial metabolism is not sufficiently slowed down or reduced. A sufficiently slowed-down or reduced microbial metabolism can be obtained not only ensuring an extremely low humidity or free water level during probiotic production, but also avoiding humidity and oxygen increase during product shelf life. Therefore, during product shelf life the ingress of environmental humidity, water vapor, light and oxygen from outside to inside said probiotic should be counteracted as much as possible.

From the above it can be inferred that a (b) type blister, having a cover made e.g. using an aluminum sheet or layer and cavity made e.g. using a thermoformable, transparent material, cannot be used successfully for packaging formulations containing pharmacological active substances and/or medical devices and/or food supplements and/or instable and/or easily perishable components with biological activity.

By way of non-limiting example, there are products based on probiotic microorganisms where the latter are mixed or supported by a lipophilic matrix, e.g. vegetable oil, or by a fat matrix, e.g. glycerol, which beside the above-described problems should also be faced with some oxidative phenomena occurring in the matrix Itself and accelerated e.g. by oxygen ingress and/or by the presence of metals and other oxidizing substances. In lipophilic matrices oxidation leads to the formation of substances such as aldehydes, ketones, oxidized fat acids (C18:3 conjugated trienes, 9,11-10,12 c,t-t,c C18:2 conjugated acids, 9,11-10,12 t,t-t,t C18:2 conjugated acids), volatile carbonyl compounds (such as C6:0 hexanal, C9:0 nonanal), which are highly toxic for the microorganisms suspended therein (intrinsic toxicity).

Also for the type of products based on probiotic microorganisms supported in a lipophilic matrix, as described above, it can be inferred that an (a) type blister, having a cover made e.g. using an aluminum sheet or layer and a cavity made e.g. using a thermoformable, transparent material, cannot be used successfully.

Therefore, for products based on living microorganisms and/or probiotic microorganisms, a technician skilled in the field should perform a source check to verify both the absence of humidity, water vapor, light and oxygen and the absence of intrinsic toxicity for the lipophilic matrix.

Moreover, once the finished products based on living microorganisms and/or probiotic microorganisms are prepared and packaged, an increase in humidity, water vapor, light and oxygen and/or the formation of toxic compounds should be prevented during the shelf life of the finished products due to oxidative phenomena occurring because of humidity, water vapor, light and oxygen entering from outside to inside the finished products, and in particular inside the lipophilic matrix of humidity, water vapor, light and oxygen.

Therefore, in order to ensure the effectiveness of finished products based on living microorganisms and/or probiotic microorganisms until the end of their shelf life, it is thus necessary not only to check the total biocompatibility of the various substances making up the formulation (absence of toxic substances such as polyphenols, tocopherols, free phenolic acids, aromatic polycyclic hydrocarbons etc. present in the lipophilic matrix and/or in the other substances of the composition), but also to also use a material for making the cavity of a blister having a real barrier effect towards humidity, water vapor, oxygen and light. Therefore, it is still necessary to have a material for making the cavity of a blister with humidity, water vapor, oxygen and light barrier, so that the obtained blister can ensure a shelf life of at least 24 months for dietary and cosmetic products, medical devices and medicinal products, in particular for finished products containing living microorganisms and/or probiotic microorganisms, still more particularly for finished products containing living microorganisms and/or probiotic microorganisms being in contact with a lipophilic matrix.

However, beyond the need of having a material for making the cavity of a blister with the characteristics as described above, there is also a second need related to the fact of having a multilayer material also having excellent mechanical properties allowing said multilayer material to be also thermoformable, highly workable and ductile as well as cheap and easily workable with the equipment already used in the field. This second need arises from the fact that there are some types of blisters, such as e.g. the one represented by way of example in Figure 2, which are manufactured by coupling a first face (a) represented by a cavity with a second face (b) represented by a cover (not shown In Figure 2).

Said first and second face form a housing having a given internal volume, which can house inside a finished product such as e.g. a tablet or a capsule.

Said first face (a), which represented the blister cavity, is made e.g. using an aluminum sheet or layer or as an alternative an aluminum sheet or layer coupled with a plastic material where the barrier element is represented by the aluminum layer. However, since aluminum is not thermoformable, the shape of the blister cavity is necessarily quite elongated with subsequent reduction of material yield with surface being the same (cavities made on surface).

Said second face (b), which represents the blister cover, is made e.g. using one or more aluminum sheets or layers coupled together. The aluminum cover should have such a thickness as to allow it to be opened by means of a light pressure exerted with fingers when using the blister.

The multilayer material known and used for making the blister cavity, as the one described above (Figure 2) cannot be worked so as to obtain housings having a shape matching the external surface of the tablet or capsule housed therein. This depends on the poor working properties of aluminum, which makes the multilayer material containing the latter deformable but not thermoformable.

For this reason said multilayer material made e.g. using an aluminum sheet or layer or as an alternative an aluminum sheet or layer coupled with a plastic material (face (a) in Figure 2) cannot be worked so as to obtain housings having an internal volume that is slightly greater than the volume of the tablet or capsule housed therein. The term "slightly greater" means a volume of the housing that is greater than the volume of the tablet or capsule to such an extent as to be able to introduce during manufacture the table or capsule into the housing, and to remove during use by the end consumer the tablet or capsule from the housing, without wasting volume and/or material for manufacturing the housing.

As a matter of fact, as can be inferred from Figure 2, the housings made with the known multilayer material, due to its poor mechanical properties and low workability, are dome-shaped as an ellipsoid cut along the longer axis, with an evident waste of volume, of multilayer material used and of effective area, with a blister area being the same, with subsequent reduction of the maximum number of capsules or tables to be packaged with a blister area being the same.

By way of non-limiting example, the blister shown in Figure 2 has a greater size of 14.5 cm and a smaller size of 9 cm and can house 10 tablets weighing 1.3 g/tablet (tablet volume of about 7.3 cm³) only, since the known multilayer material used for making the cavity cannot be worked so as to obtain housing having a shape matching the external surface of the tablets or capsules housed therein and cannot be worked so as to obtain housings having a slightly greater internal volume (about 2-5%) than the volume of the tablet or capsule housed therein.

As a matter of fact, the dome-shaped housing (cavity or housing) as an ellipsoid cut along the greater axis has a greater axis of about 3.8 cm and a smaller axis of about 2.4 cm so as to house a tablet weighing 1.3 g having a greater axis of about 2.2 cm and a smaller axis of about 0.8 cm.

The impossibility of making cavities having a shape matching the tablet or capsule housed therein or a slightly greater volume than the internal volume which is slightly greater than the volume of the tablet or capsule housed therein, involves a series of drawback.

A first drawback consists in that the blister made with said known multilayer material is more expensive since it requires a far higher amount of multilayer material used for making the cavities, with the number of packaged tablets or capsules being the same.

A second drawback consists in that, with a blister area being the same, the use of the known multilayer material results in a smaller number of housings and therefore in a smaller number of tablets or capsules which can be packaged in the blister.

Finally, the multilayer material used for manufacturing a type of blister as the one shown by way of example in Figure 2 requires, in order to be worked, very expensive equipment that are therefore difficult to be found in the packaging industry of finished products.

Thus, there is still the need to have a multilayer material for making the cavity of a blister which in addition to an excellent barrier effect to humidity, water vapor, oxygen and light, also has such high mechanical properties as to allow said multilayer material to be thermoformable, highly workable and ductile as well as cheap and easily workable with equipment already present in the field.

In particular, there is still the need to have a blister whose cavity is made with said multilayer material, being it possible to use said blister for packaging products containing living microorganisms and/or probiotic microorganisms as tablets or hard capsules or soft capsules (soft gel) containing a lipophilic matrix and microorganisms.

The Applicant has provided a suitable response to the above-mentioned need by preparing a new multilayer material which combines excellent mechanical properties since it is thermoformable, highly workable and ductile, with a high barrier to humidity, water vapor, oxygen and light. An object of the present invention is a blister comprising a cavity and a cover coupled one with the other so as to form a housing, having the characteristics as listed in the appended independent claim.

Other preferred embodiments of the present invention are disclosed in the following detailed description, said preferred embodiments being claimed in the appended dependent claims.

In the framework of the present invention, the word "film" and "layer" are used interchangeably,

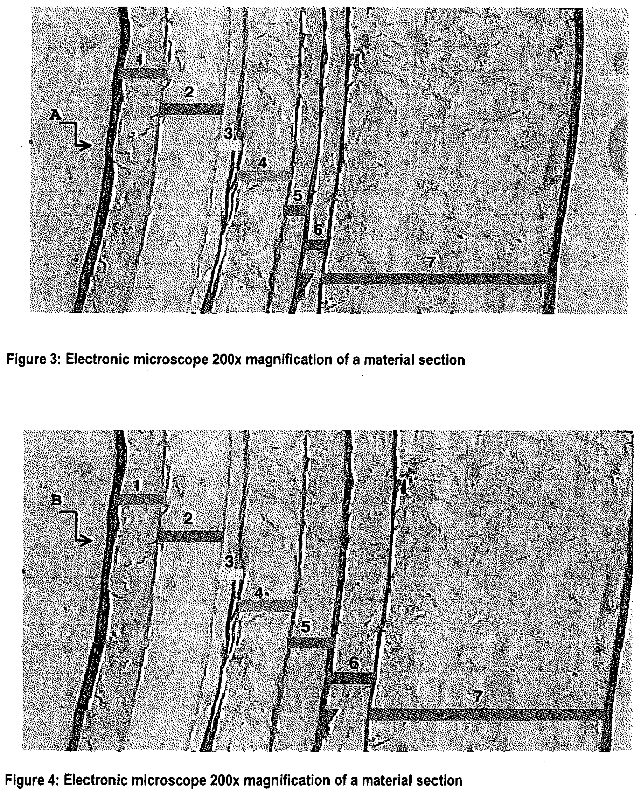

In one embodiment, the multilayer material (A) of the present invention is shown in Figure 3.

Figure 3 shows a 200x magnification, at the electronic microscope, of a section of the multilayer material (A) of the present invention.

In Figure 3, the multilayer material of the present invention (A) [(1)-(2)-(3)-(4)-(5)-(6)-(7)] comprises a first outer layer (1) and a second outer layer (7). Said first outer layer (1) has a first outer face and a second outer face. Said first outer face of said first outer layer (1) represents the external portion of the multilayer material (A) of the present invention.

Said first outer layer (1) is made of stiff, non-plasticized polyvinyl chloride (PVC) which offers a good stiffness and resistance to heat together with an excellent transparency.

Said first outer layer (1) has an average thickness of 25 to 31 µm, preferably of 27, and can be selected among the materials listed in Table 1.

The first outer layer (1), through its second outer face, is coupled with a first outer face of an extruded material (2-3-4, Figure 3) having a first outer face and a second outer face.

The coupling between said second outer face of said outer layer (1) and said first outer face of the extruded material (2-3-4, Figure 3) is preferably obtained with a solvent-free, two-component polyurethane adhesive known to skilled technicians for hot lamination processes at a temperature of 45°C to 65°C, preferably at 60°C. An example of said adhesive is the commercial product Novacote SF-707-A with a co-reactant CA-308, whose characteristics are listed in Table 2.

The extruded material (2-3-4, Figure 3) is made up of three layers of material coupled one with the other by extrusion.

Said extruded material is selected among:
[polypropylene (PP) - first layer/EVOH - second intermediate layer/polypropylene (PP) - third layer] having a total thickness of 120 µm, 130 µm, 140 µm or 150 µm, with a thickness of EVOH (ethylene vinyl alcohol) of 10 µm, 20 µm, 20 µm or 10 µm, respectively, so as to obtain a PP/EVOH/PP extruded material of 120/10, 130/20, 140/20 and 150/10 type, as shown in Table 2. For instance, an extruded material (2-3-4, Figure 3) [PP/EVOH/PP] of 140/20 type is a material consisting of a first PP layer with a thickness of 60 µm, a second intermediate EVOH layer with a thickness of 20 µm and a third PP layer with a thickness of 60 µm.

Said extruded material is obtained by simultaneous extrusion (co-extrusion) of at least three layers of material or films, under hot conditions and without using glue, according to procedures and equipment known to skilled technicians.

The extruded material (2-3-4, Figure 3) is selected among [PP/EVOH/PP] having the characteristics listed in Table 3, preferably the one referred to with 140/20.

The extruded material (2-3-4, Figure 3), through its second outer face, is coupled with a first outer face of a metallized material (5, Figure 3) having a first outer face and second outer face.

The metallized material (5, Figure 3) is preferably selected among polyethylene terephthalates (PETs) having a thickness of 10 µm to 16 µm, preferably 12 µm.

An example of a metallized material is Sarafil Polyplex Polyester Films of TPWC type (high metal bonding, corona treated) of TPL - Trasparent Paper Ltd. (Zurich, Switzerland). Preferably, the metallized material, also referred to as PET-met, (5) has the characteristics listed in Table 4.

The metallized material (5) has a first outer face previously treated with a corona treatment performed with a procedure known to technical experts, and a second outer face previously metallized by depositing an aluminum layer, preferably vaporized aluminum oxide, with a thickness preferably of 0.8 to 1.6 µm, still more preferably of 1 to 1.5 µm.

The extruded material (2-3-4, Figure 3), through its second outer face, is coupled with said metallized material (5) by means of its first outer face using preferably a two-component polyurethane adhesive having the above characteristics, such as e.g. the commercial product Novacote SF-707-A.

The metallized material (5), through its second metallized outer face, is coupled with a first metallized outer face made of a metallized material (6) having a first metallized outer face and a second outer face.

The coupling between the metallized material (5) and the metallized material (6) occurs by means of said second metallized outer face made of said metallized material (5) and said first metallized outer face made of said metallized material (6) using a two-component polyurethane adhesive having the above characteristics, such as e.g. the commercial product Novacote SF-707-A.

The metallized material (6) has the same characteristics as the metallized material (5) described above and is selected from the group of materials having the characteristics described in Table 4.

The metallized material (6, Figure 3) is preferably selected among polyethylene terephthalates (PETs) having a thickness of 10 µm to 16 µm, preferably 12 µm.

An example of a metallized material PET-met is Sarafil Polyplex Polyester Films of TPWC type (high metal bonding, corona treated) of TPL - Trasparent Paper Ltd. (Zurich, Switzerland).

The metallized material (6), through its second outer face, is coupled with a first outer face of said second outer layer (7) - Figure 3, having a first outer face and a second outer face.

The second outer layer (7) is selected among polyvinyl chlorides (PVCs), materials which can be hot-thermoformed at a temperature of 50 to 70°C, preferably of 55 to 65°C.

Said second outer layer (7) has a PVC thickness of 200 µm to 300 µm ±5%, preferably of 250 µm ±5%. Preferably, said second outer layer (7) is selected from the group of materials having a PVC basis weight of 300 to 400 g/m² ±5%, preferably of 340 g/m² ±5%, a breaking load (MD) ASTM D882 of 25 to 40 MPa, an elongation at break (MD) ASTM D882 of 50 to 100%, a Vicat softening point ASTM D1525 of about 80°C ±1, a dimensional stability (140°C, 10') ASTM D1204 max. -6% MD, max +2% TD, a permeability to water vapor (38°C, 90% R.H.) ASTM F1249 of about 3.1 g/m² 24 hours.

The coupling between said second outer face of said metallized material (6) and said first outer face of said second outer material (7) Figure 3, preferably occurs by using a two-component polyurethane adhesive having the above characteristics, such as e.g. the commercial product Novacote SF-707-A.

The second outer face of said second outer material (7) is the internal portion of the multilayer material of the present invention, which comes in direct contact with the formulations of the dietary and cosmetic products, medical devices and medicinal products in the form e.g. of tablets, pills, ovules, powders, granulates, suppositories, hard and soft capsules (also known as soft gel capsules).

An embodiment of the multilayer material (A), Figure 3, of the present invention, having preferably a total thickness of 441 µm and preferably a total weight of di 559.80 g/sqm, is disclosed below:
- First outer layer (1): PVC with a thickness of 27 µm, preferably with a weight of 37.8 g/sqm;
- Extruded material (2)-(3)-(4):
- PP layer (2) with a thickness of 60 µm, preferably with a weight of 54 g/sqm;
- EVOH intermediate layer (3) with a thickness of 20 µm, preferably with a weight of 28 g/sqm;
- PP layer (3) with a thickness of 60 µm, preferably with a weight of 54 g/sqm;
- Metallized material (5): PET-met with a thickness of 12 µm, preferably with a weight of 18 g/sqm;
- Metallized material (6): PET-met with a thickness of 12 µm, preferably with a weight of 18 g/sqm;
- Second outer layer (7): PVC with a thickness of 250 µm, preferably with a weight of 350 g/sqm.

In another embodiment, the multilayer material (B) of the present invention is shown in Figure 4.

Figure 4 shows a shows a 200x magnification, at the electronic microscope, of a section of the multilayer material (B) of the present invention.

In Figure 4, the multilayer material of the present invention (B) [(1)-(2)-(3)-(4)-(5)-(6)-(7)] comprises a first outer layer (1) and a second outer layer (7). Said first outer layer (1) has a first outer face and a second outer face. Said first outer face of said first outer layer (1) represents the external portion of the multilayer material (B) of the present invention.

Said first outer layer (1) is made of stiff, non-plasticized polyvinyl chloride (PVC) which offers a good stiffness and resistance to heat together with an excellent transparency.

Said first outer layer (1) has an average thickness of 25 to 30 µm, preferably of 27, and can be selected among the materials listed in Table 1.

The first outer layer (1), through its second outer face, is coupled with a first outer face of an extruded material (2-3-4, Figure 4) having a first outer face and a second outer face.

The coupling between said second outer face of said outer layer (1) and said first outer face of the extruded material (2-3-4, Figure 4) is preferably obtained with a solvent-free, two-component polyurethane adhesive known to skilled technicians for hot lamination processes at a temperature of 45°C to 65°C, preferably at 60°C. An example of said adhesive is the commercial product Novacote SF-707-A with a co-reactant CA-308, whose characteristics are listed in Table 2.

The extruded material (2-3-4, Figure 4) is made up of three layers of material coupled one with the other by extrusion.

Said extruded material is selected among:
[polypropylene (PP) - first layer/EVOH - second intermediate layer/polypropylene (PP) - third layer] having a total thickness of 120 µm, 130 µm, 140 µm or 150 µm, with a thickness of EVOH (ethylene vinyl alcohol) of 10 µm, 20 µm, 20 µm or 10 µm, respectively, so as to obtain a PP/EVOH/PP extruded material of 120/10, 130/20, 140/20 and 150/10 type, as shown in Table 2. For instance, an extruded material (2-3-4, Figure 4) [PP/EVOH/PP] of 140/20 type is a material consisting of a first PP layer with a thickness of 60 µm, a second intermediate layer with a thickness of 20 µm and a third PP layer with a thickness of 60 µm.

Said extruded material is obtained by simultaneous extrusion (co-extrusion) of at least three layers of material or films, under hot conditions and without using glue, according to procedures and equipment known to skilled technicians.

The extruded material (2-3-4, Figure 4) is selected among [PP/EVOH/PP] having the characteristics listed in Table 3, preferably the one referred to with 140/20.

The extruded material (2-3-4, Figure 4), through its second outer face, is coupled with a first outer face of a material (5, Figure 4) having a first outer face and second outer face.

The metallized material (5, Figure 4) is preferably selected among polyvinyl chlorides (PVCs) having a thickness of 25 µm to 31 µm, preferably 27 µm.

The metallized material, also referred to as PVC-met (5), Figure 4, is selected among the material having the characteristics as listed in Table 5.

The metallized material (5) has a first outer face and a second outer face previously metallized by depositing an aluminum layer, preferably vaporized aluminum oxide, with a thickness as listed in Table 5. The extruded material (2-3-4, Figure 4), through its second outer face, is coupled with said metallized material (5) by means of its first outer face using preferably a two-component polyurethane adhesive having the above characteristics, such as e.g. the commercial product Novacote SF-707-A.

The metallized material (5), through its second metallized outer face, is coupled with a first metallized outer face made of a metallized material (6) having a first metallized outer face and a second outer face. The coupling between the metallized material (5) and the metallized material (6) occurs by means of said second metallized outer face made of said metallized material (5) and said first metallized outer face made of said metallized material (6) using a two-component polyurethane adhesive having the above characteristics, such as e.g. the commercial product Novacote SF-707-A.

The metallized material (6) has the same characteristics as the metallized material (5) described above and is selected from the group of materials having the characteristics described in Table 5.

The metallized material (6, Figure 4) is preferably selected among polyvinyl chlorides (PVCs) having a thickness of 25 µm to 31 µm, preferably 27 µm.

The metallized material (6), through its second outer face, is coupled with a first outer face of said second outer layer (7) - Figure 4, having a first outer face and a second outer face.

The second outer layer (7) is selected among materials based on polyvinyl chlorides (PVCs), which can be hot-thermoformed at a temperature of 50 to 70°C, preferably of 55 to 65°C.

Said second outer layer (7) has a PVC thickness of 200 µm to 300 µm ±5%, preferably of 250 µm ±5%. Preferably, said second outer layer (7) is selected from the group of materials having a PVC basis weight of 300 to 400 g/m² ±5%, preferably of 340 g/m² ±5%, a breaking load (MD) ASTM D882 of 25 to 40 MPa, an elongation at break (MD) ASTM D882 of 50 to 100% a Vicat softening point ASTM D1525 of about 80°C ±1, a dimensional stability (140°C, 10') ASTM D1204 max. -6% MD, max +2% TD, a permeability to water vapor (38°C, 90% R.H.) ASTM F1249 of about 3.1 g/m² 24 hours,

The coupling between said second outer face of said metallized material (6) and said first outer face of said second outer material (7) - Figure 4 preferably occurs by using a two-component polyurethane adhesive having the above characteristics, such as e.g. the commercial product Novacote SF-707-A.

The second outer face of said second outer material (7) is the internal portion of the multilayer material of the present invention, which comes in direct contact with the formulations of the dietary and cosmetic products, medical devices and medicinal products in the form e.g. of tablets, pills, ovules, powders, granulates, suppositories, hard and soft capsules (also known as soft gel capsules).

An embodiment of the multilayer material (B), Figure 4, of the present invention, having preferably a total thickness of 471 µm and preferably a total weight of di 605.80 g/sqm, is disclosed below:
- First outer layer (1): PVC with a thickness of 27 µm, preferably with a weight of 37.8 g/sqm;
- Extruded material (2)-(3)-(4):
- PP layer (2) with a thickness of 60 µm, preferably with a weight of 54 g/sqm;
- EVOH intermediate layer (3) with a thickness of 20 µm, preferably with a weight of 28 g/sqm;
- PP layer (3) with a thickness of 60 µm, preferably with a weight of 54 g/sqm;
- Metallized material (5): PVC-met with a thickness of 27 µm, preferably with a weight of 41 g/sqm;
- Metallized material (6): PVC-met with a thickness of 27 µm, preferably with a weight of 41 g/sqm;
- Second outer layer (7): PVC with a thickness of 250 µm, preferably with a weight of 350 g/sqm.

An object of the present invention is a blister comprising a cavity made using the multilayer material (A) - Figure 3 or, as an alternative, the multilayer material (B) - Figure 4, of the present invention, and a cover made with a single-layer sheet of laminated aluminum, having the characteristics as described below.

The cover made with a single-layer aluminum material has a thickness of about 9 to about 30 µm, preferably of about 20 µm.

In one embodiment, the single-layer aluminum material is a raw aluminum band with a thickness of about 20 µm and a weight of 50 to 60 g/m², preferably of 54 g/m². A first face of said single-layer aluminum material is protected on one side with e.g. a protection layer of print primer, whereas a second face of said single-layer aluminum material is lacquered with a compatible, thermosealing lacquer (which can be heat-sealed to another material during coupling) for a material based on polyvinyl chloride (PVC) or polyvinylidene chloride (PVDC).

In a preferred embodiment, the coated single-layer aluminum material contains a print primer layer in an amount by weight of about 0.7-1.3 g/m², preferably 1 g/m², a lacquer layer in an amount by weight of 5 to 6 g/m², preferably of 5.5 g/m² so as to obtain a coated or protected single-layer aluminum material with a weight of 55 to 65 g/m², preferably of 60.5 g/m².

In a preferred embodiment, the single-layer aluminum material is selected among materials having the characteristics as listed in Table 6.

In one embodiment, the blister is made by coupling said second outer face of said second outer material (7) with said second face of said single-layer aluminum material having a lacquered layer made with a compatible lacquer for a material based on polyvinyl chloride (PVC) o polyvinylidene chloride (PVDC). The external portion of the blister is represented from said first face of said single-layer aluminum material, protected with e.g. a protective layer made of print primer.

Another object of the present invention is a blister comprising a cavity made using the multilayer material (A) - Figure 3 or, as an alternative, the multilayer material (B) - Figure 4 of the present invention, and a cover made using a multilayer aluminum material having the characteristics as described below.

The cover made with a multilayer aluminum material has a thickness of about 9 to about 38 µm, preferably of about 29 µm.

In one embodiment, the multilayer, two-layer aluminum material is obtained by coupling a raw aluminum band with a thickness of about 20 µm and a weight of 50 to 60 g/m², preferably of 54 g/m², with a thin aluminum sheet having a thickness of about 9 µm.

A first face of said single-layer aluminum material is protected on one side with e.g. a protection layer of print primer, whereas a second face of said single-layer aluminum material is lacquered with a compatible lacquer for a material based on polyvinyl chloride (PVC) or polyvinylidene chloride (PVDC).

In a preferred embodiment, the coated single-layer aluminum material contains a print primer layer in an amount by weight of about 0.7-1.3 g/m², preferably 1 g/m², a lacquer layer in an amount by weight of 5 to 6 g/m², preferably of 5.5 g/m² so as to obtain a coated or protected single-layer aluminum material with a weight of 55 to 65 g/m², preferably of 60.5 g/m².

In a preferred embodiment, the single-layer aluminum material is selected among materials having the characteristics as listed in Table 6, whereas the thin aluminum sheet is selected among materials having the characteristics as listed in Table 7.

In one embodiment, the multilayer, two-layer aluminum material is obtained by coupling between said first face of said single-layer aluminum material, protected e.g. with a protective layer of print primer, and a face of a thin aluminum film having a thickness of about 9 µm.

The coupling between said first face of said single-layer aluminum material and said face of a thin aluminum sheet is preferably made by using a two-component polyurethane adhesive having the characteristics as listed above, such as e.g. the commercial product Novacote SF-707-A.

In one embodiment, the blister is made by coupling said second outer face of said second outer material (7) with said second face of said multilayer aluminum material having a lacquered layer made with a compatible lacquer for a material based on polyvinyl chloride (PVC) o polyvinylidene chloride (PVDC). The external portion of the blister is a face of the thin aluminum sheet.

An object of the present invention is a multilayer material for packaging a formulation containing probiotic microorganisms comprising:
- an extruded material 2-3-4 having a structure [polypropylene (PP) - first layer 2/EVOH - second intermediate layer 3/polypropylene (PP) - third layer 4], said extruded material having a first outer face and a second outer face,
- a first metallized material 5 selected among polyethylene terephthalate PET and polyvinyl chloride PVC, said first metallized material 5 having a first outer face and a second metallized outer face,
- a second metallized material 6 selected among polyethylene terephthalate PET and polyvinyl chloride PVC, said second metallized material 6 having a first metallized outer face and a second outer face,
- said extruded material 2-3-4, through its second outer face, is coupled with a first outer face of said first metallized material 5, and
- said first metallized material 5, through its second metallized outer face, is coupled with a first metallized outer face of said second metallized material 6 (multilayer material referred to for shortness as MM1).

In a preferred embodiment, said multilayer material MM1 comprises an extruded material 2-3-4 with a total thickness selected among 120 µm, 130 µm, 140 µm or 150 µm and a thickness of EVOH - second intermediate layer 3 selected among 10 µm, 20 µm, 20 µm or 10 µm, respectively, so as to obtain an extruded material having a structure [polypropylene (PP) - first layer 2/EVOH - second intermediate layer 3/polypropylene (PP) - third layer 4] of 55/10/55, 55/20/55, 60/20/60 and 70/10/70 type.

In a preferred embodiment, the multilayer material MM1 comprises a first metallized material 5 selected among materials based on polyethylene terephthalate PET having a first outer face and a second outer face previously metallized by depositing an aluminum layer having a thickness of 0.5 to 3 µm, preferably of 0.8 to2 µm, and further comprises a second metallized material 6 selected among materials based on polyethylene terephthalate PET having a first outer face previously metallized by depositing an aluminum layer having a thickness of 0.5 to 3 µm, preferably of 0.8 to 2 µm, and a second outer face.

In a preferred embodiment, the multilayer material MM1 comprises a said first metallized material 5 selected among polyvinyl chloride PVC materials having a first outer face and a second outer face previously metallized by depositing an aluminum layer having a thickness of 0.5 to 3 µm, preferably of 0.8 to2 µm, and further comprises a second metallized material 6 selected among materials based on polyvinyl chloride PVC having a first outer face previously metallized by depositing an aluminum layer having a thickness of 0.5 to 3 µm, preferably of 0.8 to 2 µm, and a second outer face.

In a preferred embodiment, the multilayer material MM1 comprises an extruded material 2-3-4 which, through its first outer face, is coupled by means of a second outer face of a first outer layer 1 made of polyvinyl chloride PVC, having a first outer face and a second outer face.

In a preferred embodiment, the multilayer material MM1 comprises a second metallized material 6 which, through its second outer face, is coupled by means of a first outer face of a second outer layer 7 made of polyvinyl chloride PVC, having a first outer face and a second outer face. The coupling between the various layers of material occurs by using a two-component polyurethane glue.

An object of the present invention is a blister comprising a cavity and cover coupled one with the other so as to form a housing apt to contain a formulation comprising probiotic microorganisms, said cavity being obtained with one of the preferred embodiments of the multilayer material MM1 described above (blister referred to for shortness as BB1).

In a preferred embodiment, the blister BB1 comprises a cavity made with the multilayer material according to one of the preferred embodiments described above, and a cover made with a single-layer aluminum material having a thickness of 9 to 30 µm, preferably of 20 µm, and a weight of 50 to 60 g/m², preferably of 54 g/m².

In a preferred embodiment, the blister BB1 comprises a cavity made with the multilayer material according to one of the preferred embodiments described above, and a cover made with a multilayer, two-layer aluminum material made by coupling a single-layer aluminum material having a thickness of 9 to 30 µm, preferably of 20 µm, and a weight of 50 to 60 g/m², preferably of 54 g/m², with a thin aluminum sheet having a thickness of about 9 µm.

**Table 1**

| **Property** | **Method** | **Conditions** | **Units** | | **Value** | **Value** | **Value** | **Value** | **Value** | **Value §** | **Tolerance** |
|---|---|---|---|---|---|---|---|---|---|---|---|
| **Physical characteristics** | | | | | | | | | | | |
| Density | | | g/m² | | 1.33 | 1.33 | 1.33 | 1.33 | 1.33 | 1.33 | |
| Thickness | Internal | | micron | | 25 | 26 | 27 | 28 | 30 | 31 | |
| Basis weight | Internal | | g/m² | | 33.25 | 34.58 | 35.91 | 37.24 | 39.90 | 41.23 | ±10% |

| **Mechanical characteristics** | | | | | | | | | | | |
|---|---|---|---|---|---|---|---|---|---|---|---|
| Tensile strength | ASTM D882 | | N/mm² | MD | 55 | 60 | 60 | 60 | 65 | 65 | -10% |
| | | | | TD | 45 | 50 | 50 | 50 | 60 | 60 | |
| Elongation at break | ASTM D882 | | % | MD | 120 | 120 | 130 | 130 | 140 | 140 | -10% |
| | | | | TD | 150 | 160 | 160 | 160 | 170 | 170 | |
| Shrinkage¹ | Internal | | % | MD | 12 | 12 | 10 | 10 | 10 | 8 | ±10% |
| | | | | TD | 20 | 20 | 16 | 16 | 16 | 14 | |
| Water vapor permeability² | ASTM-F-1249/06 | 38°C E 90% UR | g/m² x 24h | | 25 | 26.6 | 26.6 | 26 | 23 | 23 | ±5% |
| Gas permeability² | ASTM-D-3985/05 | 23°C E 0% UR | cm³/m² x 24h atm | O₂ | 93 | 87 | 85 | 83 | 75 | 75 | ±5% |
| | ASTM-D-2475/05 | | cm³/m² x 24h bar | CO₂ | 525 | 495 | 495 | 495 | 437 | 437 | |
| | ASTM-D-2475/05 | | cm³/m² x 24h bar | N₂ | 29,5 | 25 | 23,4 | 23,4 | 22 | 22 | |
| "VICAT" softening temperature | UNI EN ISO 306:2006 | | °C | | 70<°C>80 | 70<°C>80 | 70<°C>80 | 70<°C>80 | 70<°C>80 | 70<°C>80 | |
| Sealing² | | 135°C-2atm-3" | N/15m m | | | | | | | | |

**Table 2**

| | | **SF-707-A** | **CA-308** |
|---|---|---|---|
| **Type / Chem. character** | | NCO | OH |
| **Solid content [%]** | | 100% | 100% |
| **Viscosity @ 25 °C [mPas]** | | 3,500 ± 1,500 | 1,400 ± 400 |
| **Density @ 20 °C [g/cm³]** | | 1.12 | 1.16 |
| **Appearance** | | Light | Light |
| **Standard mixing ratio** | **[Mass %]** | 100 | 60 |
| | **[Vol %]** | 100 | 58 |

**Table 3**

| **Parameter** | | **Method** | **U.M.** | **Tolerance** | **120/10** | 1**30/20** | **140/20** | **150/10** |
|---|---|---|---|---|---|---|---|---|
| **Total thickness** | | MI-001-BP | µm | ±7% | 120 | 130 | 140 | 150 |
| **EVOH thickness** | | MI-002-BP | µm | ±10% | 10 | 20 | 20 | 10 |
| **Weight** | | MI-003-BP | g/sqm | ±7% | 117.08 | 128.88 | 138.88 | 144.08 |

| **Barrier properties** | | | | | | | | |
|---|---|---|---|---|---|---|---|---|
| **O.T.R. 23°C - 0% R.H.** | | ASTM D-3985 | cc/sqm-24h-bar | - | ≤ 0.75 | ≤ 0.40 | ≤ 0.40 | ≤ 0.75 |
| **W.V.T.R. 38°C - 90% R.H.** | | ASTMF 1249 | g/sqm-24 | - | ≤ 3.0 | ≤ 30. | ≤ 3.0 | ≤ 2.0 |

| **Optical Properties** | | | | | | | | |
|---|---|---|---|---|---|---|---|---|
| **Haze** | | MI-005-BP | % | - | ≤ 5 | ≤ 10 | ≤ 10 | ≤ 12 |
| **Gloss 20°** | | MI-006-BP | % | - | ≥ 20 | ≥ 20 | ≥ 20 | ≥ 20 |

| **Mechanical properties** | | | | | | | | |
|---|---|---|---|---|---|---|---|---|
| **Elongation at break** | **MD** | ASTM D-882 | % | | > 400 | > 400 | > 400 | > 500 |
| | **TD** | ASTM D-882 | % | - | > 400 | > 400 | > 400 | > 500 |
| **Tensile at break** | **MD** | ASTM D-882 | MPa | - | > 30 | > 35 | > 35 | > 40 |
| | **TD** | ASTM D-882 | MPa | - | > 30 | > 35 | > 35 | > 40 |

| **Parameter** | | **Method** | **U.M.** | **Tolerance** | **120/10** | **130/20** | **140/20** | **150/10** |
|---|---|---|---|---|---|---|---|---|
| **Coefficient of friction** | | MI-009-BP | - | ±0.05 | 0.30 | 0.30 | 0.30 | 0.30 |
| **Minimum sealing temperature** | | MI-004-BP | °C | - | 145 | 145 | 145 | 145 |

**Table 4**

| **Property** | | **Units** | **Nominal** | **Method** | **Conditions** |
|---|---|---|---|---|---|
| **Mechanical Properties** | | | | | |
| **Nominal thickness** | | µ | 12.0 | PTL Method | |
| **Yield** | | m²/kg | 59.6 | Polyplex Method | |
| **Unit Weight** | | g/m² | 16.80 | | |
| **Elongation at break** | **MD** | % | 130 | ASTM D-882 | |
| | **TD** | % | 125 | | |
| **Tensile strength** | **MD** | kg/cm² | 2200 | ASTM D-882 | |
| | **TD** | kg/cm² | 2300 | | |

| **Thermal Properties** | | | | | |
|---|---|---|---|---|---|
| **Heat shrinkage** | **MD** | % | 2.0 | ASTM D-1204 | 150 °C/30 minutes |
| | **TD** | % | 0.2 | | |

**Table 5**

| **Property** | **Method** | **Conditions** | **Units** | | **Value** | **Value** | **Value** | **Value** | **Value** | **Value §** | **Tolerance** |
|---|---|---|---|---|---|---|---|---|---|---|---|
| **Physical characteristics** | | | | | | | | | | | |
| Density | | | g/m² | | 1.33 | 1.33 | 1.33 | 1.33 | 1.33 | 1.33 | |
| Thickness | Internal | | micron | | 25 | 26 | 27 | 28 | 30 | 31 | |
| Basis weight | Internal | | g/m² | | 33.25 | 34.58 | 35.91 | 37.24 | 39.90 | 41.23 | ±10% |

| **Mechanical characteristics** | | | | | | | | | | | |
|---|---|---|---|---|---|---|---|---|---|---|---|
| Tensile strength | ASTM D882 | | N/mm² | MD | 55 | 60 | 60 | 60 | 65 | 65 | -10% |
| | | | | TD | 45 | 50 | 50 | 50 | 60 | 60 | |
| Elongation at break | ASTM D882 | | % | MD | 120 | 120 | 130 | 130 | 140 | 140 | -10% |
| | | | | TD | 150 | 160 | 160 | 160 | 170 | 170 | |
| Shrinkage¹ | Internal | | % | MD | 12 | 12 | 10 | 10 | 10 | 8 | ±10% |
| | | | | TD | 20 | 20 | 16 | 16 | 16 | 14 | |
| Water vapor permeability ² | ASTM-F-1249/06 | 38°C E 90% RH | g/m² x 24h | | 25 | 26.6 | 26.6 | 26 | 23 | 23 | ±5% |
| Gas permeability ² | ASTM-D-3985/05 | 23°C E 0% RH | cm³/m² x 24h atm | O₂ | 93 | 87 | 85 | 83 | 75 | 75 | ±5% |
| | ASTM-D-2475/05 | | cm³/m² x 24h bar | CO₂ | 525 | 495 | 495 | 495 | 437 | 437 | |
| | ASTM-D-2475/05 | | cm³/m² x 24h bar | N₂ | 29.5 | 25 | 23.4 | 23.4 | 22 | 22 | |
| "VICAT" softening temperature | UNI EN ISO 306:2006 | | °C | | 70<°C>8 0 | 70<°C>8 0 | 70<°C>8 0 | 70<°C>8 0 | 70<°C>80 | 70<°C>80 | |
| Sealing ² | | 135°C-2atm-3" | N/15mm | | | | | | | | |

| **Metal characteristics §** | | | | | | | | | | | |
|---|---|---|---|---|---|---|---|---|---|---|---|
| Average surface tension | ASTM D2578 | | dynes/cm | | 36 | 36 | 36 | 36 | 36 | 36 | |
| Aluminum deposit | capit. GIFLEX | | O.D. | Min. | 1.9 | 1.9 | 1.9 | 1.9 | 1.9 | 1.5 § | |
| | | | | Max | 2.1 | 2.1 | 2.1 | 2.1 | 2.1 | 1.7 § | |

| | | | | | | | | | | | |
|---|---|---|---|---|---|---|---|---|---|---|---|
| Notes: ¹ = the result is obtained as average value on 5 test pieces taken over the whole width of the extruded band ² = non-routine tests MD = longitudinal direction TD = transversal direction § = values entered for 31 my refer to demetallization | | | | | | | | | | | |

**Table 6**

| | | | | | **TESTING METHOD** | **NOMINAL VALUE** | **TOLERANCE** | **U.M.** |
|---|---|---|---|---|---|---|---|---|
| **WEIGHTS** | | | **Total** | | TQM 01 CQ | 60.5 | ±5.1 | g/m² |
| | | | **Print primer** | | TQM 01 CQ | 1.0 | ±0.3 | g/m² |
| | | | **Aluminum** | | TQM 01 CQ | 54.0 | ±4.3 | g/m² |
| | | | **Lacquer for PVC/PVDC** | | TQM 01 CQ | 55 | ±0.5 | g/m² |
| **THICKNESS** | | | **Aluminum** | | TQM 01 CQ | 20 | ±1.6 | µm |
| **MECHANICAL PROPERTIES** | | | **Tensile strength** | | TQM 02 CQ | ≥ 140 | | N/mm² |
| | | | **Elongation** | | TQM 02 CQ | ≥ 1 | | % |
| **CHEMICAL-PHYSICAL PROPERTIES** | | | **Delamination Strength** | | TQM 03 CQ (170°C-1"-3Kg/cm²) | ≥ 4 | | N/cm |
| | | | **Residual solvents** | | TQM 05 CQ | ≤ 10 | | Mg/m² |
| **ALUMINUM PROPERTIES** | | **Alloy** | | | 1200 | | | |
| | | **Temper** | | | H | | | |
| | | | | | | | | |

| **DELIVERY FORM** | | **Core material** | | **Core diameter** | | **Outside diameter** | | **Width** |
|---|---|---|---|---|---|---|---|---|
| **Reels** | | PVC | | 70 - 76 - 150 mm | | ≤ 450 mm | | on customer's request |
| **Packing** | | **On pallets, cardboard boxes or wooden** crates | | | | | | |
| | | | | | | | | |

| | | **Time** | | | **Temperature** | | **Relative humidity** | |
|---|---|---|---|---|---|---|---|---|
| **STORAGE CONDITIONS** | | 1 year | | | 10 - 40°C | | 50 - 60% | |

**Table 7**

| Gauge 9 µm | Alloy 1200 | Temper O | |
|---|---|---|---|
| Dimensional tolerances | | | |
| Single gauge | | : ±8 | " |
| Average gauge | | : ±6 | " |
| Width ≤ 1000mm | | : ±1 | mm |
| Width > 1000mm | | : ±2 | mm |
| | | | |

| Mechanical properties | | | |
|---|---|---|---|
| Tensile strength Rₘ | | : ≥ 60 | N/mm² |
| Elongation A₁₀₀ | | : ≥ 2,0 | " |
| | | | |

| Burst · test | | | |
|---|---|---|---|
| Bursting strength P | | : ≥ 15 | KPa |
| Dome height h | | : ≥ 3.2 | mm |
| | | | |

| Special properties | | | |
|---|---|---|---|
| Pinholes | | : ≤ 200 | /m² |
| Rolling holes | | : ≤ 0.20 | mm |
| Wettability | | : A ÷ C | |
| Stickiness | | : ≤ 2 | m |

## Claims

1. A multilayer material for packaging a formulation containing probiotic microorganisms comprising:
- an extruded material 2-3-4 having a structure [polypropylene (PP) - first layer 2/EVOH - second intermediate layer 3/polypropylene (PP) - third layer 4], said extruded material having a first outer face and a second outer face,
- a first metallized material 5 selected among polyethylene terephthalate PET and polyvinyl chloride PVC, said first metallized material 5 having a first outer face and a second metallized outer face,
- a second metallized material 6 selected among polyethylene terephthalate PET and polyvinyl chloride PVC, said second metallized material 6 having a first metallized outer face and a second outer face,
- said extruded material 2-3-4, through its second outer face, is coupled with a first outer face of said first metallized material 5, and
- said first metallized material 5, through its second metallized outer face, is coupled with a first metallized outer face of said second metallized material 6.

2. The multilayer material according to claim 1, wherein said extruded material 2-3-4 has a total thickness selected among 120 µm, 130 µm, 140 µm or 150 µm and a thickness of EVOH - second intermediate layer 3 selected among 10 µm, 20 µm, 20 µm or 10 µm, respectively, so as to obtain an extruded material having a structure [polypropylene (PP) - first layer 2/EVOH - second intermediate layer 3/polypropylene (PP) - third layer 4] of 55/10/55, 55/20/55, 60/20/60 and 70/10/70 type.

3. The material according to claim 1, wherein said first material 5 is selected among materials based on polyethylene terephthalate PET having a first outer face and a second outer face previously metallized by depositing an aluminum layer having a thickness of 0.5 to 3 µm, preferably of 0.8 to 2 µm, and wherein said second metallized material 6 is selected among polyethylene terephthalate PET materials having a first outer face previously metallized by depositing an aluminum layer having a thickness of 0.5 to 3 µm, preferably of 0.8 to 2 µm, and a second outer face.

4. The material according to claim 1, wherein said first metallized material 5 is selected among polyvinyl chloride PVC materials having a first outer face and a second outer face previously metallized by depositing an aluminum layer having a thickness of 0.5 to 3 µm, preferably of 0.8 to 2 µm, and wherein said second metallized material 6 is selected among polyvinyl chloride PVC materials having a first outer face previously metallized by depositing an aluminum layer having a thickness of 0.5 to 3 µm, preferably of 0.8 to 2 µm, and a second outer face.

5. The multilayer material according to one of the claims 1-4, wherein said extruded material 2-3-4, through its first outer face, is coupled by means of a second outer face of a first outer layer 1 made of polyvinyl chloride PVC, having a first outer face and a second outer face.

6. The multilayer material according to one of the claims 1-5, wherein said second metallized material 6, through its second outer face, is coupled by means of a first outer face of a second outer layer 7 made of polyvinyl chloride PVC, having a first outer face and a second outer face.

7. The multilayer material according to one of the claims 1 to 6, wherein the coupling occurs by using a two-component polyurethane adhesive.

8. A blister packaging comprising a cavity and a cover coupled with one another so as to form a housing apt to contain a formulation comprising probiotic microorganisms, said cavity being made using the multilayer material according to one of the claims 1 to 7.

9. The blister packaging according to claim 8, wherein:
- said cavity is made with the multilayer material according to one of the claims 1 to 7, and
- said cover is made with a single-layer aluminum material having a thickness of 9 to 30 µm, preferably of 20 µm, and a weight of 50 to 60 g/m², preferably of 54 g/m².

10. The blister packaging according to claim 8, wherein:
- said cavity is made with the multilayer material according to one of the claims 1 to 7, and
- said cover is a multilayer, two-layer aluminum material made by coupling a single-layer aluminum material having a thickness of 9 to 30 µm, preferably of 20 µm, and a weight of 50 to 60 g/m², preferably of 54 g/m², with a thin aluminum sheet having a thickness of 9 µm.

## Patentansprüche

1. Mehrschichtiges Material zum Verpacken einer probiotische Mikroorganismen enthaltenden Formulierung, umfassend:
- ein extrudiertes Material 2-3-4 mit einer Struktur [Polypropylen (PP) - erste Schicht 2/EVOH - zweite Zwischenschicht 3/Polypropylen (PP) - dritte Schicht 4], wobei das extrudierte Material eine erste äußere Fläche und eine zweite äußere Fläche aufweist,
- ein erstes metallisiertes Material 5, ausgewählt aus Polyethylenterephthalat PET und Polyvinylchlorid PVC, wobei das erste metallisierte Material 5 eine erste äußere Fläche und eine zweite metallisierte äußere Fläche aufweist,
- ein zweites metallisiertes Material 6, ausgewählt aus Polyethylenterephthalat PET und Polyvinylchlorid PVC, wobei das zweite metallisierte Material 6 eine erste metallisierte äußere Fläche und eine zweite äußere Fläche aufweist,
- wobei das extrudierte Material 2-3-4 durch seine zweite äußere Fläche mit einer ersten äußeren Fläche des ersten metallisierten Materials 5 verbunden ist und
- wobei das erste metallisierte Material 5 durch seine zweite metallisierte äußere Fläche mit einer ersten metallisierten äußeren Fläche des zweiten metallisierten Materials 6 verbunden ist.

2. Mehrschichtiges Material nach Anspruch 1, wobei das extrudierte Material 2-3-4 eine Gesamtdicke ausgewählt aus 120 µm, 130 µm, 140 µm bzw. 150 µm und eine Dicke des EVOH - zweite Zwischenschicht 3 ausgewählt aus 10 µm, 20 µm, 20 µm bzw. 10 µm aufweist, um extrudiertes Material mit einer Struktur [Polypropylen (PP) - erste Schicht 2/EVOH - zweite Zwischenschicht 3/Polypropylen (PP) - dritte Schicht 4] der Art 55/10/55, 55/20/55, 60/20/60/ und 70/10/70 zu erhalten.

3. Material nach Anspruch 1, wobei das erste Material 5 aus auf Polyethylenterephthalat-PET-basierenden Materialien mit einer ersten äußeren Fläche und einer zweiten äußeren Fläche ausgewählt wird, die zuvor durch Abscheidung einer Aluminiumschicht mit einer Dicke von 0,5 bis 3 µm, vorzugsweise 0,8 bis 2 µm, metallisiert wurde, und wobei das zweite metallisierte Material 6 aus Polyethylenterephthalat-PET-Materialien mit einer ersten äußeren Fläche, die zuvor durch Abscheidung einer Aluminiumschicht mit einer Dicke von 0,5 bis 3 µm, vorzugsweise 0,8 bis 2 µm, metallisiert wurde, und einer zweiten äußeren Fläche, ausgewählt wird.

4. Material nach Anspruch 1, wobei das erste metallisierte Material 5 aus Polyvinylchlorid-PVC-Materialien mit einer ersten äußeren Fläche und einer zweiten äußeren Fläche ausgewählt wird, die zuvor durch Abscheidung einer Aluminiumschicht mit einer Dicke von 0,5 bis 3 µm, vorzugsweise 0,8 bis 2 µm, metallisiert wurde, und wobei das zweite metallisierte Material 6 aus Polyvinylchlorid-PVC-Materialien mit einer ersten äußeren Fläche, die zuvor durch Abscheidung einer Aluminiumschicht mit einer Dicke von 0,5 bis 3 µm, vorzugsweise 0,8 bis 2 µm, metallisiert wurde, und einer zweiten äußeren Fläche, ausgewählt wird.

5. Mehrschichtiges Material nach einem der Ansprüche 1 bis 4, wobei das extrudierte Material 2-3-4 durch seine erste äußere Fläche mit einer zweiten äußeren Fläche einer ersten äußeren Schicht 1 aus Polyvinylchlorid PVC verbunden ist, die eine erste äußere Fläche und eine zweite äußere Fläche aufweist.

6. Mehrschichtiges Material nach einem der Ansprüche 1 bis 5, wobei das zweite metallisierte Material 6 durch seine zweite äußere Fläche mit einer ersten äußeren Fläche einer zweiten äußeren Schicht 7 aus Polyvinylchlorid PVC verbunden ist, die eine erste äußere Fläche und eine zweite äußere Fläche aufweist.

7. Mehrschichtiges Material nach einem der Ansprüche 1 bis 6, wobei die Verbindung durch Verwendung eines Zweikomponenten-Polyurethan-Bindemittels entsteht.

8. Blisterverpackung, umfassend einen Hohlraum und eine Abdeckung, die zur Bildung einer Umhausung miteinander verbunden sind, welche als Behälter für eine Formulierung mit probiotischen Mikroorganismen geeignet ist, wobei der Hohlraum durch Verwendung des mehrschichtigen Materials nach einem der Ansprüche 1 bis 7 hergestellt ist.

9. Blisterverpackung nach Anspruch 8, wobei:
- der Hohlraum mit dem mehrschichtigen Material nach einem der Ansprüche 1 bis 7 hergestellt wird und
- die Abdeckung aus einem einschichtigen Aluminiummaterial mit einer Dicke von 9 bis 30 µm, vorzugsweise 20 µm, und mit einem Gewicht von 50 bis 60 g/m², vorzugsweise 54 g/m², hergestellt wird.

10. Blisterverpackung nach Anspruch 8, wobei:
- der Hohlraum aus dem mehrschichtigen Material nach einem der Ansprüche 1 bis 7 hergestellt wird und
- die Abdeckung ein mehrschichtiges, zweischichtiges Aluminiummaterial ist, das durch Verbinden eines einschichtigen Aluminiummaterials mit einer Dicke von 9 bis 30 µm, vorzugsweise 20 µm, und mit einem Gewicht von 50 bis 60 g/m², vorzugsweise 54 g/m², mit einer dünnen Aluminiumfolie mit einer Dicke von 9 µm hergestellt wird.

## Revendications

1. Matériau multicouche pour conditionner une formulation contenant des microorganismes probiotiques, comprenant :
- un matériau extrudé 2-3-4 ayant une structure de [polypropylène (PP) - première couche 2 / EVOH - deuxième couche intermédiaire 3 / polypropylène (PP) - troisième couche 4], ledit matériau extrudé ayant une première face extérieure et une deuxième face extérieure,
- un premier matériau métallisé 5 choisi parmi le poly(téréphtalate d'éthylène) PET et le poly(chlorure de vinyle) PVC, ledit premier matériau métallisé 5 ayant une première face extérieure et une deuxième face extérieure métallisée,
- un deuxième matériau métallisé 6 choisi parmi le poly(téréphtalate d'éthylène) PET et le poly(chlorure de vinyle) PVC, ledit deuxième matériau métallisé 6 ayant une première face extérieure métallisée et une deuxième face extérieure,
- ledit matériau extrudé 2-3-4, par l'intermédiaire de sa deuxième face extérieure, étant couplé à une première face extérieure dudit premier matériau métallisé 5, et
- ledit premier matériau métallisé 5, par l'intermédiaire de sa deuxième surface métallisée, étant couplé à une première face extérieure métallisée dudit deuxième matériau métallisé 6.

2. Matériau multicouche selon la revendication 1, dans lequel ledit matériau extrudé 2-3-4 a une épaisseur totale choisie parmi 120 µm, 130 µm, 140 µm et 150 µm, et une épaisseur d'EVOH - deuxième couche intermédiaire 3 choisie parmi 10 µm, 20 µm, 20 µm et 10 µm, respectivement, de façon que soit obtenu un matériau extrudé ayant une structure [polypropylène (PP) - première couche 2 / EVOH - deuxième couche intermédiaire 3 / polypropylène (PP) - troisième couche 4] de type 55/10/55, 55/20/55, 60/20/60 et 70/10/70.

3. Matériau selon la revendication 1, dans lequel ledit premier matériau 5 est choisi parmi les matériaux à base de poly(téréphtalate d'éthylène) PET ayant une première face extérieure et une deuxième face extérieure métallisée à l'avance par déposition d'une couche d'aluminium ayant une épaisseur de 0,5 à 3 µm, de préférence de 0,8 à 2 µm, et dans lequel ledit deuxième matériau métallisé 6 est choisi parmi les matériaux en poly(téréphtalate d'éthylène) PET ayant une première face extérieure métallisée à l'avance par déposition d'une couche d'aluminium ayant une épaisseur de 0,5 à 3 µm, de préférence de 0,8 à 2 µm, et une deuxième face extérieure.

4. Matériau selon la revendication 1, dans lequel ledit premier matériau métallisé 5 est choisi parmi les matériaux en poly(chlorure de vinyle) PVC ayant une première face extérieure et une deuxième face extérieure métallisée à l'avance par déposition d'une couche d'aluminium ayant une épaisseur de 0,5 à 3 µm, de préférence de 0,8 à 2 µm, et dans lequel ledit deuxième matériau métallisé 6 est choisi parmi les matériaux en poly(chlorure de vinyle) PVC ayant une première face extérieure métallisée à l'avance par déposition d'une couche d'aluminium ayant une épaisseur de 0,5 à 3 µm, de préférence de 0,8 à 2 µm, et une deuxième face extérieure.

5. Matériau multicouche selon l'une des revendications 1 à 4, dans lequel ledit matériau extrudé 2-3-4, par l'intermédiaire de sa première face extérieure, est couplé au moyen d'une deuxième face extérieure d'une première couche extérieure 1 faite de poly(chlorure de vinyle) PVC, ayant une première face extérieure et une deuxième face extérieure.

6. Matériau multicouche selon l'une des revendications 1 à 5, dans lequel ledit deuxième matériau métallisé 6, par l'intermédiaire de sa deuxième face extérieure, est couplé au moyen d'une première face extérieure d'une deuxième couche extérieure 7 faite de poly(chlorure de vinyle) PVC, ayant une première face extérieure et une deuxième face extérieure.

7. Matériau multicouche selon l'une des revendications 1 à 6, dans lequel le couplage a lieu par utilisation d'un adhésif à base de polyuréthane à deux composants.

8. Emballage blister comprenant une cavité et un cache couplés l'une à l'autre de façon à former un logement apte à contenir une formulation comprenant des microorganismes probiotiques, ladite cavité étant réalisée par utilisation du matériau multicouche de l'une des revendications 1 à 7.

9. Emballage blister selon la revendication 8, dans lequel :
- ladite cavité est faite du matériau multicouche de l'une des revendications 1 à 7, et
- ledit cache est fait d'un matériau en aluminium monocouche ayant une épaisseur de 9 à 30 µm, de préférence de 20 µm, et un poids de 50 à 60 g/m², de préférence de 54 g/m².

10. Emballage blister selon la revendication 8, dans lequel :
- ladite cavité est faite du matériau multicouche de l'une des revendications 1 à 7, et
- ledit cache est un matériau en aluminium bicouche multicouche obtenu par couplage d'un matériau en aluminium monocouche ayant une épaisseur de 9 à 30 µm, de préférence de 20 µm, et un poids de 50 à 60 g/m², de préférence de 54 g/m², avec une feuille mince d'aluminium ayant une épaisseur de 9 µm.
